# EUROPÄISCHE PATENTANMELDUNG

(11) **EP 4 018 824 A1**
(43) Veröffentlichungstag der Anmeldung: **29.06.2022**
(21) Anmeldenummer: 20217065.0
(22) Anmeldetag: 23.12.2020
(51) Int. Cl.: A01M 7/00

(54) **VORRICHTUNG UND VERFAHREN ZUR IDENTIFIZIERUNG VON SCHÄDLINGEN UND KRANKHEITSERREGERN AUF EINEM BESTANDTEIL EINER PFLANZE**

(71) Anmelder: Agroscope, 3003 Bern (CH)
(72) Erfinder: Michel, Vincent Valentin, 3960 Sierre (CH); Höchemer, Matthias, 6072 Sachseln (CH); Widmer, Silvan, 6005 Luzern (CH); Schmid, Philipp, 6005 Luzern (CH)
(74) Vertreter: Keller Schneider Patent- und Markenanwälte AG

(57) **Zusammenfassung**

Die vorliegende Anmeldung betrifft eine Vorrichtung zum Bestimmen von Schädlingen und Krankheitserregern auf Pflanzen. Die Vorrichtung umfasst ein Gehäuse mit einem Bildsensor, eine Rechnereinheit sowie einer Ausgabeeinheit. Die Rechnereinheit ist derart ausgestaltet, dass diese mittels einer Analyse mindestens eines durch den Bildsensor aufgenommenen Bildes eines Bestandteiles einer Pflanze darauf befindliche Schädlinge und Krankheitserreger identifizieren und auf der Ausgabeeinheit entsprechende Informationen anzeigen kann. Der Bildsensor ist an einer Aussenfläche des Gehäuses angeordnet, wobei das Gehäuse über eine Klappe verfügt, welche vor den Bildsensor bewegt werden kann, so dass dieser vollständig von der Klappe verdeckt wird und sich zwischen Klappe und Bildsensor ein definierter, gegenüber aussen lichtdichter Zwischenraum bildet, in welchem der Bestandteil der Pflanze klemmend gehalten werden kann.

## Beschreibung

### Technisches Gebiet

Die Erfindung betrifft eine Vorrichtung sowie ein Verfahren zum Bestimmen von Schädlingen und Krankheitserregern auf einem Bestandteil einer Pflanze, wobei anhand einer Analyse eines Bildes des Bestandteiles der Pflanze darauf befindliche Schädlinge und Krankheitserregern identifiziert und entsprechende Informationen angezeigt werden.

### Stand der Technik

In der Landwirtschaft verursachen Schädlinge und Krankheitserreger jedes Jahr erhebliche Ertragsausfälle. Der Einsatz von Pflanzenschutzmitteln, wie Insektizide, Akarizide, Fungizide, Bakterizide oder Antibiotika zur Bekämpfung von Schädlingen sowie Krankheitserregern ist möglich, verursacht jedoch selbst ökologische Schäden und kann auch die Gesundheit der Konsumenten gefährden. Daher ist es wichtig, den Einsatz von Pflanzenschutzmitteln so gering wie möglich zu halten. Dies kann beispielsweise dadurch erzielt werden, dass bei Schädlingsbefall oder Befall durch Krankheitserregern ein sehr spezifisch auf den entsprechenden Schädling bzw. dem entsprechenden Krankheitserreger gerichtetes Mittel verwendet wird bzw. Fressfeinde des Schädlings als Nützling eingesetzt werden. Dies bedingt jedoch eine eindeutige Identifizierung des Schädlings bzw. Krankheitserregers, was bisher den Einsatz von Spezialisten nötig gemacht hat, was jedoch aus Kosten- oder Zeitründen nicht immer möglich ist.

Zur Vereinfachung wurden Vorrichtungen entwickelt, welche eine automatische Identifizierung von Schädlingen ermöglichen. Die CN 210428540 U beschreibt beispielsweise eine derartige Vorrichtung, welche über eine Rechnereinheit, ein Kameramodul sowie einem Schädlingsbekämpfungsmodul verfügt. Die Rechnereinheit ist mit dem Kameramodul verbunden und ist dafür ausgelegt, Schädlinge auf Bildern, die durch das Kameramodul aufgenommen werden, zu identifizieren und das Resultat an einen Server zu senden. Zudem kann die Vorrichtung über ein Positionsbestimmungsmodul verfügen, mit welchem ein Abstand sowie eine Richtung zwischen dem Schädling und der Vorrichtung bestimmt werden können. Die Vorrichtung kann über ein Leuchtelement verfügen, mit welchem eine zusätzliche Beleuchtung bei schlechten Lichtverhältnissen zugeschaltet werden kann. Zudem kann die Vorrichtung über einen Speicher, eine Batterie sowie einem Energiemanagementchip verfügen. Die Rechnereinheit kann Schädlinge mittels Bildanalysealgorithmen erkennen.

Nachteilig an einer derartigen Vorrichtung ist, dass diese für eine effektive Identifikation von Schädlingen mit dem Server verbunden sein muss. Ferner kann die Identifikation von Schädlingen durch die Lichtverhältnisse erschwert oder gar verunmöglicht werden, da diese je nach Situation, in welcher ein Bild gemacht wird, unterschiedlich sein werden.

### Darstellung der Erfindung

Aufgabe der Erfindung ist es, eine dem eingangs genannten technischen Gebiet zugehörende Vorrichtung zu schaffen, welche eine von einer Verbindung mit einem externen Server sowie von Lichtverhältnissen unabhängige, zuverlässige Bestimmung von Schädlingen sowie Krankheitserregern ermöglicht.

Die Lösung der Aufgabe ist durch die Merkmale des Anspruchs 1 definiert. Gemäss der Erfindung umfasst eine Vorrichtung zum Bestimmen von Schädlingen und Krankheitserregern auf Pflanzen ein Gehäuse mit einem Bildsensor, eine Rechnereinheit sowie einer Ausgabeeinheit. Die Rechnereinheit ist derart ausgestaltet, dass diese mittels einer Analyse mindestens eines durch den Bildsensor aufgenommenen Bildes eines Bestandteiles einer Pflanze darauf befindliche Schädlinge und Krankheitserreger identifizieren und auf der Ausgabeeinheit entsprechende Informationen anzeigen kann. Der Bildsensor ist an einer Aussenfläche des Gehäuses angeordnet, wobei das Gehäuse über eine Klappe verfügt, welche vor den Bildsensor bewegt werden kann, so dass dieser vollständig von der Klappe verdeckt wird und sich zwischen Klappe und Bildsensor ein definierter, gegenüber aussen lichtdichter Zwischenraum bildet, in welchem der Bestandteil der Pflanze klemmend gehalten werden kann.

Dadurch, dass der Bestandteil der Pflanze klemmend im von aussen lichtdichten Zwischenraum gehalten wird, kann ein Bild des Bestandteiles der Pflanze bei immer denselben Lichtverhältnissen innerhalb des Zwischenraumes aufgenommen werden, was die Zuverlässigkeit bei der Bestimmung der Schädlinge bzw. Krankheitserreger erhöht. Da ferner alle Komponenten zum Bestimmen der Schädlinge bzw. Krankheitserreger in der Vorrichtung selbst vorhanden sind, können auch draussen im Feld ohne Datenverbindung zu einem externen Server Schädlinge bzw. Krankheitserreger auf Pflanzen bestimmt werden.

Die Vorrichtung kann grundsätzlich zur Bestimmung aller Arten von Schädlingen und Krankheitserregern ausgelegt sein, das heisst, dass die Rechnereinheit über eine entsprechende Analysesoftware verfügt, mit denen alle Arten von Schädlingen und Krankheitserregern bestimmt werden können. Als Schädlinge werden insbesondere Agrar- und Forstschädlinge verstanden. Schädlinge sind insbesondere Insekten, wie zum Beispiel Käfer, Wanzen, Blattläuse, Fransenflügler und Schmetterlinge, und Spinnentiere, wie zum Beispiel Spinn- und Gallmilben. Kranheitserreger sind insbesondere Pilze, Scheinpilze, Bakterien und Viren.

Einem Fachmann ist klar, dass mittels der Vorrichtung sowohl Schädlinge als auch Krankheitserreger auf einem Bestandteil einer Pflanze identifiziert werden können, sofern die Pflanze tatsächlich von mindestens einem Schädling bzw. mindestens einem Krankheitserreger befallen ist. Sollte die Pflanze keinen Befall aufweisen wird eine entsprechende Information durch die Ausgabeeinheit ausgegeben. Auch bei einem Befall mit nur mindestens einem Schädling, jedoch ohne Befall durch Krankheitserreger, wird nur dieser mindestens eine Schädling identifiziert und eine entsprechend Information durch die Ausgabeeinheit ausgegeben. Dasselbe gilt natürlich analog auch bei einem Befall mit mindestens einem Krankheitserreger, jedoch ohne weiteren Befall durch mindestens einen Schädling.

Die erfindungsgemässe Vorrichtung ist insbesondere zur Bestimmung von Schädlingen bzw. Krankheitserregern auf Nutzpflanzen, insbesondere im Agrar- und Forstbereich wie auch bei der Produktion von Schnittblumen einsetzbar. Dabei kann die Vorrichtung sowohl auf einem Feld, im Wald, einem Gewächshaus eingesetzt werden.

Der Bestandteil der Pflanze ist vorzugsweise ein Kelch- oder Blütenblatt, ein Staubblatt, eine Knospe, eine Frucht, ein Fruchtstück, ein Samen, ein Rhizom, ein Stück Rinde, ein Stück Borke oder ein Stück einer Wurzel.

Das Gehäuse ist vorzugsweise aus einem stossfesten, witterungsbeständigen Material, wie zum Beispiel Aluminium, Stahl oder einem Kunststoff wie Acrylnitril-Butadien-StyrolCopolymer (ABS) gefertigt. Das Gehäuse ist ferner vorzugsweise wasserdicht, um die innerhalb des Gehäuses angeordneten Komponenten der Vorrichtung, insbesondere die Rechnereinheit, vor Wasser und Feuchtigkeit zu schützen.

Das Gehäuse kann grundsätzlich in jeder Form vorliegen, vorzugsweise weist das Gehäuse jedoch die Grundform eines Quaders auf, wobei dieses Zwecks Ergonomie auch über Rundungen, geschwungene Flächen, gefaste Kanten oder dergleichen verfügen kann.

Das Gehäuse kann einstückig ausgebildet sein, umfasst jedoch vorzugsweise mindestens zwei Teile, welche für Montage-, Wartungs- sowie Reparaturzwecke auseinandergenommen werden können. Die mindestens zwei Teile sind vorzugsweise mittels Schrauben miteinander verbunden. Alternativ können die mindestens zwei Teile auch mit anderen Befestigungsmitteln miteinander verbunden sein, wie zum Beispiel durch Schnappverschlüsse, Riegel oder dergleichen. Ein mehrteiliges Gehäuse umfasst vorzugsweise eine Grundplatte sowie eine Abdeckhaube.

Der Bildsensor nimmt vorzugsweise Bilder im sichtbaren Lichtbereich oder im Infrarot auf. Vorzugsweise ist der Bildsensor ein CCD-Bildsensor oder ein CMOS-Bildsensor.

Die Rechnereinheit weist vorzugsweise mindestens einen Prozessor oder Mikrochip auf. Die Rechnereinheit führt eine Analysesoftware aus, mit welcher durch den Bildsensor aufgenommene Bilder analysiert werden können. Anhand der Bildanalyse können auf dem Bestandteil der Pflanze befindliche Schädlinge bzw. Krankheitserreger identifiziert werden. Der Bildsensor wird vorzugsweise durch die Rechnereinheit gesteuert.

Die Identifikation von Schädlingen bzw. Krankheitserregern erfolgt vorzugsweise direkt, d.h. durch Erkennung der Schädlinge bzw. Krankheitserreger auf dem Bestandteil der Pflanze mittels der Bildanalyse. Bei Krankheitserregern können ferner vorzugweise Fruchtkörper, ein sporulierendes Myzel oder Sporen des Krankheitserregers direkt mittels der Bildanalyse identifiziert werden. Alternativ bevorzugt kann ein Schädling bzw. ein Krankheitserreger auch indirekt über die durch ihn verursachten Symptome bzw. Schäden auf dem Bestandteil der Pflanze identifiziert werden, z.B. anhand einer Fleckenbildung oder eines Frassbildes auf dem Bestandteil der Pflanze. Vorzugsweise erfolgt die Bestimmung von Schädlingen bzw. von Krankheitserregern auf einem Bestandteil einer Pflanze anhand einer Kombination von direkter und indirekter Identifikation.

Die Ausgabeeinheit ist vorzugsweise eine Anzeige, insbesondere eine LCD-Anzeige, auf welche die identifizierten Schädlinge bzw. Krankheitserreger angezeigt werden können. Alternativ kann die Ausgabeeinheit zusätzlich über eine Tonausgabe verfügen, mit welcher spezifische Töne, Tonfolgen oder Sprache ausgegeben werden können, insbesondere voraufgezeichnete oder synthetisch erzeugte Sätze oder Satzfragmente.

Der Bildsensor verfügt vorzugsweise über eine transparente Scheibe, die auf oder innerhalb einer Aussenfläche des Gehäuses angeordnet ist, und welche den Bildsensor vor äusseren Einflüssen, wie Nässe, Stösse oder Staub schützt. Das heisst, das Merkmal, wonach der Bildsensor an einer Aussenfläche des Gehäuses angeordnet ist, ist derart zu verstehen, dass ein Bestandteil des Bildsensors auf der Aussenfläche angeordnet ist, während andere Bestanteile des Bildsensors sich innerhalb des Gehäuses befinden.

Die Klappe ist vorzugsweise über einen Mechanismus vor dem Bildsensor lösbar befestigbar, zum Beispiel mittels Magnetbefestigungen, Dreh- oder Schieberiegel oder einem Formschlusselement, insbesondere über eine Schnappverbindung. Insbesondere bevorzugt verfügt die Klappe auch über Mittel mit denen sich die Klappe auf der Aussenfläche des Gehäuses, an welchem der Bildsensor angeordnet ist, derart bewegen lässt, dass diese in einer geschlossenen Position den Bildsensor verdeckt und in einer zweiten Position der Bildsensor frei vorliegt. Die Mittel sind vorzugsweise Scharniere, mit denen die Klappe vom Bildsensor weg und wieder auf diesen zurück geschwenkt werden kann, oder eine Linearführung, mit welcher die Klappe vom Bildsensor weg und wieder vor diesen verschoben werden kann.

Das Gehäuse und/oder die Klappe sind/ist dabei derart ausgestaltet, dass zwischen dem Bildsensor und der Klappe ein Zwischenraum gebildet wird, wenn die Klappe den Bildsensor vollständig verdeckt, das heisst, dass zwischen Bildsensor und Klappe ein Abstand ist. Vorzugsweise weist die Klappe oder das Gehäuse eine beim durch die Klappe verdeckten Bildsensor diesen umlaufende Dichtlippe, welche zugleich den Zwischenraum lichtdicht verschliesst.

Die Vorrichtung weist ferner eine Energieversorgung auf, insbesondere eine Batterie, einen Akkumulator, eine Solarzelle oder eine Kombination hiervon auf. Alternativ kann die Vorrichtung, auch zusätzlich zu den vorgenannten Energieversorgungen, über eine Buchse zum Anschliessen eines Stromkabels, beispielsweise zum Aufladen eines Akkumulators oder für die direkte Stromversorgung, aufweisen. Ferner kann das Gehäuse der Vorrichtung über weitere Elemente verfügen, wie zum Beispiel einen Griff, eine Trageschlaufe oder eine Abdeckung für die Ausgabeeinheit.

Ferner kann die Vorrichtung auch über einen Anschluss für ein Datenkabel verfügen, wie zum Beispiel über einen USB-Anschluss, um Daten zwischen der Rechnereinheit und einem externen Netzwerk oder Rechner austauschen zu können, beispielsweise für Wartungs- oder Diagnosezwecke oder zur Aktualisierung der Analysesoftware.

Vorzugsweise verfügt die Vorrichtung über einen nicht-flüchtigen Speicher, auf welchem Daten zu identifizierten Schädlingen und Krankheitserregern einer bestimmten Aufnahme sowie der Zeitpunkt der Aufnahme gespeichert werden können, wobei die Vorrichtung über weitere Mittel verfügt, um die Daten mit einer bestimmten Pflanze oder einem bestimmten Ort zu verknüpfen.

Dadurch kann beispielsweise eine Karte zum Schädlingsbefall bzw. Befall mit Krankheitserregern von Pflanzen in einem bestimmten geographischen Gebiet, einem bestimmten Feld oder Gewächshaus erstellt werden. Ferner kann durch eine wiederholte Bestimmung des Befalls mit Schädlingen bzw. Krankheitserregern derselben Pflanze oder von Pflanzen, die räumlich nahe beieinander stehen, die zeitliche Entwicklung des Befalls aufgezeichnet werden.

Die Speicherung der Daten erfolgt vorzugsweise in einer Datenbank, die auf dem nicht-flüchtigen Speicher gespeichert ist. Der nicht-flüchtige Speicher ist vorzugsweise ein Festkörperspeicher (solid state disc - SSD), ein Halbleiterspeicher wie EPROM oder Flash-Speicher oder ein magnetischer Speicher.

Zur Bestimmung des Zeitpunktes weist die Rechnereinheit vorzugsweise einen entsprechenden Zeitgeber auf.

Die Verknüpfung der Daten mit einer bestimmten Pflanze oder einem bestimmten Ort kann beispielsweise mit einem Strichcodescanner erfolgen, mit welchem auf einer Liste oder lokal angebrachte Strichcodes eingescannt werden können, welche einer bestimmten Pflanze oder einem bestimmten Ort zugeordnet sind. Alternativ kann auch mittels Tasten eine einer Pflanze oder einem Ort zugeordnete Identifikationsnummer eingegeben werden.

Die Mittel zum Verknüpfen der Daten mit einer bestimmten Pflanze oder mit einem bestimmten Ort umfasst mindestens ein Ortsbestimmungssystem, insbesondere GPS. Dadurch kann die der Aufnahme entsprechende Pflanze oder der entsprechende Ort automatisch und präzise erfasst und mit den Daten verknüpft werden. Als Ortsbestimmungssystem können auch andere Systeme, wie GLONASS oder Galileo alleine oder in Kombination miteinander oder mit GPS verwendet werden, um eine präzisere Ortsbestimmung zu erzielen.

Alternativ kann als Ortsbestimmungssystem auch ein lokales System verwendet werden, beispielsweise basierend auf Funksendern, wie zum Beispiel Bluetooth^{®} Beacons.

Vorzugsweise umfassen die Mittel zum Verknüpfen der Daten mit einer bestimmten Pflanze oder einem bestimmten Ort über Eingabemittel, wie einer Tastatur oder einem Touch-Screen Bildschirm, über welche durch einen Bediener der Vorrichtung entsprechende Informationen eingegeben werden können.

Vorzugsweise ist die Rechnereinheit derart ausgestaltet, dass die auf dem mindestens einen Bild identifizierten Schädlinge und Krankheitserreger gezählt werden. Dies erlaubt zusätzlich eine Quantifizierung der Schädlinge bzw. Krankheitserreger und somit ein Mass für den Befall einer Pflanze oder in einem geographischen Gebiet.

Sofern mehrere Arten von Schädlingen und Krankheitserregern auf dem Pflanzenbestandteil identifiziert werden, so ist die Rechnereinheit derart ausgestaltet, dass die Schädlinge bzw. Krankheitserreger jeder einzelnen Art separat gezählt werden.

Die Anzahl der Schädlinge bzw. Krankheitserreger wird vorzugsweise gespeichert, insbesondere in den Daten, welche mit einer bestimmten Pflanze oder einem bestimmten Ort verknüpft sind. Dadurch kann der Befall mit Schädlingen bzw. Krankheitserregern einer bestimmten Pflanze oder an einem bestimmten Ort zeitlich überwacht und nachverfolgt werden, beispielsweise um den Erfolg von Schutzmassnahmen überprüfen zu können.

Die Vorrichtung verfügt über mindestens ein Leuchtmittel, mit welchem der Zwischenraum beleuchtet wird. Das mindestens eine Leuchtmittel ist vorzugsweise eine LED mit einer Emission im sichtbaren Lichtbereich. Mit dem mindestens einen Leuchtmittel kann im Zwischenraum eine konstante Beleuchtung erzielt werden, was die Identifizierung von Schädlingen bzw. Krankheitserregern oder auch von durch diesen verursachten Symptomen oder Frassbildern erleichtert. Auch kann mit dem mindestens einen Leuchtmittel beispielsweise durch Variation der Leuchtstärke der Kontrast bei der Aufnahme einer Serie mehrerer Bilder verändert werden bzw. der Kontrast für die Aufnahme eines Bildes optimiert werden.

Vorzugsweise umfasst die Vorrichtung mehrere Leuchtmittel. Die mehreren Leuchtmittel sind vorzugsweise Leuchtmittel derselben Art, z.B. LEDs. Alternativ können jedoch auch Leuchtmittel unterschiedlicher Arten eingesetzt werden. Die mehreren Leuchtmittel weisen vorzugsweise alle dasselbe Emissionsspektrum auf. Dadurch kann ein besonders gleichmässiges Ausleuchten des gesamten Zwischenraums erzielt werden. Alternativ können jedoch auch Leuchtmittel mit unterschiedlichen Emissionsspektren vorhanden sein. Dadurch können vom selben Pflanzenteil Bilder bei Beleuchtung mit unterschiedlichen Lichtspektren aufgenommen werden, womit die Zuverlässigkeit der Identifikation von Schädlingen bzw. Krankheitserregern sowie die Anzahl der Arten an Schädlingen und Krankheitserregern, die mit der Vorrichtung bestimmt werden können, erhöht werden kann.

Die Vorrichtung verfügt vorzugsweise über eine drahtlose Kommunikationseinheit, mit welcher die Daten über ein drahtloses Kommunikationsnetzwerk versendet werden können. Dies ermöglicht die externe Speicherung der Daten, beispielsweise auf einem Server. Dadurch können beispielsweise auf einem grösseren land- oder forstwirtschaftlichen Betrieb die Daten mehrerer Vorrichtungen zentral gespeichert und angezeigt werden, so dass einem Betreiber des Betriebs ein Gesamtbild des Befalls an Schädlingen bzw. Krankheitserregern sowie des Erfolgs von Bekämpfungsmassnahmen ermöglicht wird.

Alternativ kann die Vorrichtung jedoch auch über einen Steckplatz für eine Speicherkarte, wie z.B. eine SD-Speicherkarte, oder einen USB-Anschluss zum Anschliessen einer externen Festplatte aufweisen

Die vorliegende Anmeldung bezieht sich ferner auf ein Verfahren zum Bestimmen von Schädlingen oder von Krankheitserregern mit einer Vorrichtung mit einem Gehäuse umfassend eine Klappe sowie ein auf einer Seitenfläche angeordneten Bildsensor. In einem ersten Schritt des Verfahrens wird ein Bestandteil einer Pflanze auf der Klappe oder dem Bildsensor angeordnet. Anschliessend wird die Klappe bewegt, so dass diese den Bildsensor vollständig abdeckt. Dabei wird zwischen der Klappe und dem Bildsensor ein von aussen lichtdichter Raum gebildet, in welchem der Bestandteil der Pflanze klemmend gehalten wird. Anschliessend wird mindestens ein Bild des Bestandteiles der Pflanze mit dem Bildsensor aufgenommen, wobei das mindestens eine Bild durch eine Rechnereinheit der Vorrichtung zur Identifizierung von auf dem Bestandteil der Pflanze befindlichen Schädlingen und Krankheitserregern analysiert wird. Schlussendlich werden Informationen zu den identifizierten Schädlingen und Krankheitserregern auf einer Ausgabeeinheit der Vorrichtung angezeigt. Die Vorrichtung ist vorzugsweise eine erfindungsgemässe Vorrichtung wie weiter vorn beschrieben.

Die vorliegende Anmeldung bezieht sich ferner auf die Verwendung einer weiter vorn beschriebenen erfindungsgemässen Vorrichtung zum Bestimmen von Schädlingen und Krankheitserregern auf einem Bestandteil einer Pflanze.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Schnittzeichnung einer Ausführungsform einer erfindungsgemässen Vorrichtung in einer schematischen Darstellung;
- Fig. 2: eine isometrische Ansicht einer weiteren Ausführungsform einer erfindungsgemässen Vorrichtung mit abgesetzter Abdeckhaube des Gehäuses;
- Fig. 3: die Ansicht gemäss Fig. 2 mit aufgesetzter Abdeckhaube des Gehäuses.

Grundsätzlich sind in den Figuren gleiche Teile mit gleichen Bezugszeichen versehen.

### Wege zur Ausführung der Erfindung

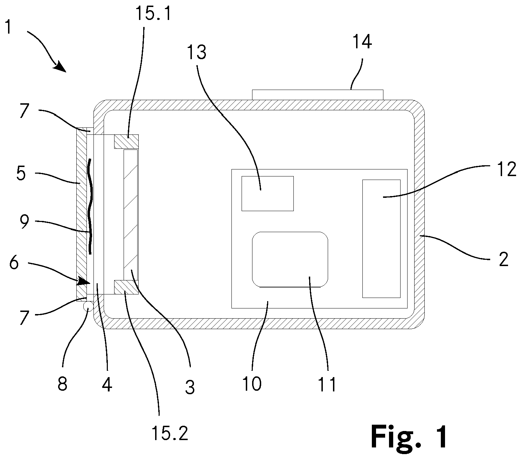

Die Fig. 1 zeigt eine Schnittzeichnung einer Ausführungsform einer erfindungsgemässen Vorrichtung 1 zum Bestimmen von Schädlingen und Krankheitserregern auf einem Bestandteil 9 einer Pflanze. Die Vorrichtung 1 weist ein Gehäuse 2 sowie einen Bildsensor 3 auf, welcher derart angeordnet ist, dass ein Bestandteil des Bildsensors 3 an einer Aussenfläche des Gehäuses 2 angeordnet ist. Dieser Bestandteil ist eine transparente Scheibe 4, welche in die Aussenfläche des Gehäuses 2 integriert ist und die den Bildsensor vor äusseren Einflüssen, wie Nässe oder Schmutz, schützt. Ferner weist das Gehäuse 2 eine Klappe 5 auf, welche vor den Bildsensor 3 bzw. der Scheibe 4 bewegt werden, so dass dieser durch die Klappe 5 vollständig verdeckt wird. Die Klappe 5 weist eine umlaufende Dichtung 7 auf, so dass zwischen Bildsensor 3 bzw. Scheibe 4 und der Klappe 5 ein Zwischenraum 6 gebildet wird, in welchem der Bestandteil 9 der Pflanze klemmend gehalten wird. Durch die umlaufende Dichtung 7 wird der Zwischenraum 6 lichtdicht von der Umgebung abgeschirmt. Bei der gezeigten Ausführungsform erfolgt die Bewegung der Klappe 5 durch eine Schwenkbewegung, die mittels eines Scharniers 8 erfolgt. Ferner sind im Bereich des Bildsensors 3 Leuchtmittel 15.1, 15.2 angeordnet, mit denen sich der Zwischenraum 6 ausleuchten lässt.

Die Vorrichtung 1 weist ferner eine Rechnereinheit 10 auf, welche innerhalb des Gehäuses 2 angeordnet ist. Die Rechnereinheit 10 verfügt über einen Prozessor 11, einem nicht-flüchtigen Speicher 12 sowie ein Ortsbestimmungssystem 13. Mit der Rechnereinheit 10 können mittels einer Analysesoftware, welche im nicht-flüchtigen Speicher 12 gespeichert ist, ein Bild bzw. mehrere Bilder des Bestandteils 9 der Pflanze analysiert werden um darauf befindliche Schädlinge und Krankheitserreger zu identifizieren. Daten, welche das bzw. die aufgenommenen Bilder sowie Informationen zu den darauf identifizierten Schädlingen bzw. Krankheitserregern enthalten, werden im nicht-flüchtigen Speicher 12 gespeichert. Mit dem Ortsbestimmungssystem 13 kann der Standort der Vorrichtung 1 bestimmt werden, so dass die gespeicherten Daten mit einer an diesem Ort befindlichen Pflanze bez. mit dem geographischen Standort verknüpft werden können.

Informationen zu den durch die Analysesoftware identifizierten Schädlingen und Krankheitserregern werden auf einer Ausgabeeinheit, welche bei der gezeigten Ausführungsform in der Form einer Anzeige 14 vorliegt, ausgegeben.

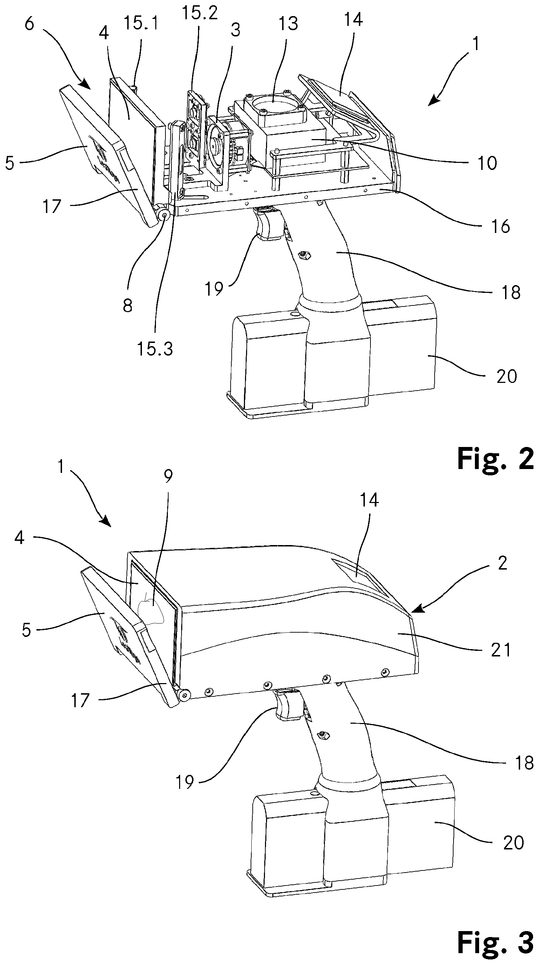

Die Fig. 2 und die Fig. 3 zeigen eine zweite Ausführungsform einer erfindungsgemässen Vorrichtung 1 in einer isometrischen Ansicht. Diese Ausführungsform weist ein zweiteiliges Gehäuse 2 auf, welches aus einer Bodenplatte 16 sowie einer Abdeckhaube 21 besteht. Die Fig. 2 zeigt die Vorrichtung bei abgenommener Abdeckhaube 21, während die Fig. 3 dieselbe Vorrichtung 1 mit aufgesetzter Abdeckhaube 21 darstellt.

Auf der Bodenplatte 16 sind ein Bildsensor 3, eine Rechnereinheit 10, Leuchtmittel 15.1, 15.2, 15.3 sowie eine Ausgabeeinheit in der Form einer Anzeige 14 angeordnet. An einer vorderen Kante der Bodenplatte 16 befindet sich eine Klappe 5, welche über ein Scharnier 8 schwenkbar zu einer transparenten Scheibe 4, welche vor dem Bildsensor 3 sowie den Leuchtmitteln 15.1, 15.2, 15.3 angeordnet ist. Die Klappe 5 weist eine umlaufende Wandung 17 auf, so dass sich zwischen der Scheibe 4 und der Klappe 5 ein Zwischenraum 6 bildet, in welchem ein Bestandteil 9 einer Pflanze klemmend gehalten werden kann (siehe Fig. 3).

Im Unterschied zur Ausführungsform gemäss Fig. 1 weist die Ausführungsform gemäss den Fig. 2 und 3 an der Grundplatte 16 einen Handgriff 18 in der Form eines Pistolengriffs auf, so dass die Vorrichtung 1 einfach einhändig gehalten werden kann. Am Handgriff 18 ist eine Auslösertaste 19 angeordnet. Mittels dieser Auslösertaste 19 kann durch einen Tastendruck die Aufnahme eines Bildes des Bestandteils 9 der Pflanze sowie dessen anschliessende Analyse durch die Rechnereinheit 10 ausgelöst werden. Informationen zu identifizierten Schädlingen und Krankheitserregern auf dem Bestandteil 9 der Pflanze werden anschliessend auf der Anzeige 14 angezeigt.

Am unteren Ende des Handgriffs 18 ist eine abnehmbare Batterie 20, welche als aufladbare Batterie ausgestaltet ist, angeordnet. Durch die Anordnung der Batterie 20 am unteren Ende des Handgriffs 18 wird eine gute Gewichtsverteilung erzielt, da die beiden schweren Bestandteile der Vorrichtung 1, nämlich die Batterie 20 sowie das Gehäuse 2 mit dessen Inhalt an beiden entgegengesetzten Enden des Handgriffs 18 angeordnet sind.

## Patentansprüche

1. Vorrichtung zum Bestimmen von Schädlingen und Krankheitserregern auf Pflanzen, umfassend ein Gehäuse mit einem Bildsensor, einer Rechnereinheit sowie einer Ausgabeeinheit, wobei die Rechnereinheit derart ausgestaltet ist, dass diese mittels einer Analyse mindestens eines durch den Bildsensor aufgenommenen Bildes eines Bestandteiles einer Pflanze darauf befindliche Schädlinge und Krankheitserreger identifizieren und auf der Ausgabeeinheit entsprechende Informationen anzeigen kann, und wobei der Bildsensor an einer Aussenfläche des Gehäuses angeordnet ist, **dadurch gekennzeichnet, dass** das Gehäuse über eine Klappe verfügt, welche vor den Bildsensor bewegt werden kann, so dass dieser vollständig von der Klappe verdeckt wird und sich zwischen Klappe und Bildsensor ein definierter, gegenüber aussen lichtdichter Zwischenraum bildet, in welchem der Bestandteil der Pflanze klemmend gehalten werden kann.

2. Vorrichtung gemäss Anspruch 1, **dadurch gekennzeichnet, dass** die Vorrichtung über einen nicht-flüchtigen Speicher verfügt, auf welchem Daten zu identifizierten Schädlingen und Krankheitserregern einer bestimmten Aufnahme sowie der Zeitpunkt der Aufnahme gespeichert werden können, wobei die Vorrichtung über weitere Mittel verfügt, um die Daten mit einer bestimmten Pflanze oder einem bestimmten Ort zu verknüpfen.

3. Vorrichtung gemäss Anspruch 2, **dadurch gekennzeichnet, dass** die Mittel mindestens ein Ortsbestimmungssystem, insbesondere GPS umfasst.

4. Vorrichtung gemäss Anspruch 2 oder 3, **dadurch gekennzeichnet, dass** die Mittel mindestens ein Eingabemittel umfasst, insbesondere eine Tastatur oder eine Touch-Screen Bildschirm.

5. Vorrichtung gemäss einem der Ansprüche 1 bis 4, **dadurch gekennzeichnet, dass** die Rechnereinheit derart ausgestaltet ist, dass die auf dem mindestens einen Bild identifizierten Schädlinge und Krankheitserreger gezählt werden.

6. Vorrichtung gemäss einem der Ansprüche 1 bis 5, **dadurch gekennzeichnet, dass** die Vorrichtung über mindestens ein Leuchtmittel verfügt, mit welchem der Zwischenraum beleuchtet wird.

7. Vorrichtung gemäss einem der Ansprüche 2 bis 6, **dadurch gekennzeichnet, dass** die Vorrichtung über eine drahtlose Kommunikationseinheit verfügt, mit welcher die Daten über ein drahtloses Kommunikationsnetzwerk versendet werden können.

8. Verfahren zum Bestimmen von Schädlingen und Krankheitserregern auf Pflanzen mit einer Vorrichtung mit einem Gehäuse umfassend eine Klappe sowie einen auf einer Seitenfläche angeordneten Bildsensor, insbesondere gemäss einem der Ansprüche 1 bis 7, **gekennzeichnet durch** die folgenden Schritte:
a) Anordnen eines Bestandteiles einer Pflanze auf der Klappe oder auf dem Bildsensor;
b) Bewegen der Klappe, so dass diese den Bildsensor vollständig abdeckt, wobei zwischen der Klappe und dem Bildsensor ein von aussen lichtdichter Zwischenraum gebildet wird, in welchem der Bestandteil der Pflanze klemmend gehalten wird;
c) Aufnehmen mindestens eines Bildes des Bestandteiles der Pflanze mit dem Bildsensor;
d) Analysieren des mindestens einen Bildes durch eine Rechnereinheit der Vorrichtung zur Identifizierung von auf dem Bestandteil der Pflanze befindlichen Schädlingen und Krankheitserregern;
e) Anzeigen von Informationen zu identifizierten Schädlingen und Krankheitserregern auf einer Ausgabeeinheit der Vorrichtung.

9. Verwendung einer Vorrichtung gemäss einem der Ansprüche 1 bis 7 zum Bestimmen von Schädlingen und Krankheitserregern auf einem Bestandteil einer Pflanze.
